# EUROPEAN PATENT APPLICATION

(11) **EP 4 292 815 A1**
(43) Date of publication of application: **20.12.2023**
(21) Application number: 22815796.2
(22) Date of filing: 10.05.2022
(51) Int. Cl.: B32B 27/32, B32B 27/18, B65D 65/40

(54) **MULTILAYER FILM, PACKAGING MATERIAL, AND PACKAGE**

(30) Priority: 31.05.2021 JP 2021091365
(71) Applicant: TOPPAN INC., Tokyo 110-0016 (JP)
(72) Inventor: HAMADA, Daisuke, Tokyo 110-0016 (JP)
(74) Representative: TBK
(86) International application number: PCT/JP2022/019845
(87) International publication number: WO 2022/255041

(57) **Abstract**

The present disclosure relates to a multilayer film including: a first outer layer containing a propylene homopolymer (A) and a propylene-ethylene random copolymer (B) and serving as a heat seal layer; an inner layer containing a propylene-ethylene block copolymer (C) and an ethylene-propylene copolymer elastomer (D); and a second outer layer containing a propylene homopolymer (A) and a propylene-ethylene random copolymer (B), in this order, in which at least one layer of the first outer layer, the inner layer, and the second outer layer further contains a polyphenol compound.

## Description

### Technical Field

The present disclosure relates to a multilayer film, a packaging material, and a package. More particularly, the present disclosure relates to a polypropylene-based multilayer film that can be suitably used as a sealant film for a package even for harsh treatments such as a boiling water treatment or a retort treatment, and a packaging material and a package obtainable by using the polypropylene-based multilayer film.

### Background Art

Polypropylene-based films have excellent rigidity and heat resistance and are inexpensive, and accordingly, polypropylene-based films are used as sealant films for various materials for packaging such as food packaging. Principal use applications of the polypropylene-based films include use applications for packaging intended for retort food, which involve performing sterilization by high-temperature pressurization treatment or disinfection.

In packaged foods subjected to sterilization or disinfection treatment at high temperatures, such as retort foods, contents thereof may be deteriorated and denatured due to heat sterilization during production or long-term storage, and a denature odor may be generated. Generation sources of this denature odor include carbohydrates, oils and fats, proteins, and the like, and among them, denature odors of proteins included in meat, fish, soybeans, eggs, and the like, particularly sulfurous odors originating from sulfur compounds, often cause problems.

In Patent Literature 1, a package characterized in that a coating agent composed of a zinc compound and a solvent or a dispersion medium is applied on the surface of an oxygen barrier material, which is a film composed of a resin layer including a polycarboxylic acid-based polymer formed on a base material film, has been proposed.

In Patent Literature 2, a laminated body for heat sterilization treatment, including a sealant layer including a heat-sealable resin and a hydrophobic zeolite having a SiO₂/Al₂O₃ molar ratio of 30/1 to 8000/1, has been proposed.

### Citation List

### Patent Literature

Patent Literature 1: Japanese Unexamined Patent Publication No. 2013-018551
Patent Literature 2: Japanese Unexamined Patent Publication No. 2019-177521

### Summary of Invention

### Technical Problem

The packages described in Patent Literature 1 and Patent Literature 2 exhibit a deodorizing effect against sulfurous odors; however, there is room for improvements in terms of the visibility of the contents.

The present disclosure was achieved in view of the above-described circumstances, and it is an object of the present disclosure to provide a multilayer film that is excellent in terms of the deodorization properties against sulfurous odors generated from the contents and the visibility of the contents. It is another object of the present disclosure to provide a packaging material and a package obtainable by using the multilayer film.

### Solution to Problem

The inventors conducted a thorough investigation in order to solve the above-described problems, and as a result, the inventors found that it is important to blend a polyphenol compound into at least one layer among a plurality of polypropylene-based layers constituting a polypropylene-based multilayer film, thus completing the following multilayer film.

A multilayer film according to an aspect of the present disclosure includes a first outer layer containing a propylene homopolymer (A) and a propylene-ethylene random copolymer (B) and serving as a heat seal layer; an inner layer containing a propylene-ethylene block copolymer (C) and an ethylene-propylene copolymer elastomer (D); and a second outer layer containing a propylene homopolymer (A) and a propylene-ethylene random copolymer (B), in this order, in which at least one layer of the first outer layer, the inner layer, and the second outer layer further contains a polyphenol compound.

In the multilayer film, when a polyphenol compound is blended into a polypropylene film, an excellent deodorizing effect against sulfurous odors originating from sulfur compounds can be obtained by strong reducing power brought by the hydroxyl groups carried by the polyphenol compound. Furthermore, by using a polyphenol compound, which is an organic compound, in a material imparting a deodorizing effect, diffuse reflection of light within the film can be suppressed, and excellent transparency can be obtained, as compared with the case of blending an inorganic compound. With such a film, a deodorizing effect can be obtained while further improving the visibility of the contents, as compared with the case of using a coating agent including zinc oxide particles (for example, above-described Patent Literature 1) and the case of using a sealant layer including a hydrophobic zeolite (for example, Patent Literature 2). This effect is particularly suitable for use applications for food retort treatment in which sulfurous odors are likely to be generated. Furthermore, a polyphenol compound has an advantage of having less impact on the environment and human health, in comparison with other organic or inorganic deodorants that are not derived from natural products.

According to an embodiment, a content of the polyphenol compound may be 1.5% to 8.0% by mass based on a total amount of the multilayer film. As a result, both superior deodorizing properties and visibility can be achieved.

According to an embodiment, the inner layer may contain 90 to 50 parts by mass of the propylene-ethylene block copolymer (C) and 10 to 50 parts by mass of the ethylene-propylene copolymer elastomer (D) and may further contain a polyphenol compound. When the inner layer contains 90 to 50 parts by mass of the propylene-ethylene block copolymer (C) and 10 to 50 parts by mass of the ethylene-propylene copolymer elastomer (D), flexibility of the film is maintained, and excellent cold impact resistance is likely to be obtained. Furthermore, when the inner layer contains a polyphenol compound, a deodorizing function can be imparted to the multilayer film. Particularly, by incorporating a polyphenol compound into the inner layer that tends to have a larger layer thickness than the outer layers, the apparent abundance is reduced, and transparency is easily secured.

According to an embodiment, the first outer layer and the second outer layer may contain 70 to 30 parts by mass of the propylene homopolymer (A) and 30 to 70 parts by mass of the propylene-ethylene random copolymer (B) and may further contain a polyphenol compound. By using a propylene homopolymer (A) and propylene-ethylene random copolymer (B) having high smoothness, surface unevenness, which is a factor lowering the transparency of a film, is easily suppressed. As a result, both superior heat resistance and transparency can be achieved. Furthermore, when the outer layers contain a polyphenol compound, a deodorization function can be imparted to the multilayer film.

According to an embodiment, the polyphenol compound may be a condensed-type tannin. As a result, both superior deodorizing properties and visibility can be achieved.

According to an embodiment, the total thickness of the first outer layer and the second outer layer may be 25% to 42% based on the thickness of the multilayer film. As a result, both transparency and heat sealability is easily achieved.

According to an embodiment, the inner layer may have a thickness of 30 µm or more. As a result, flexibility of the film is easily maintained, and excellent cold impact resistance is easily obtained.

A packaging material according to an aspect of the present disclosure includes the above-described multilayer film and a base material.

A package according to an aspect of the present disclosure is obtained by making a bag from the above-described packaging material.

### Advantageous Effects of Invention

According to the present disclosure, a multilayer film having excellent deodorizing properties against sulfurous odors generated from contents and excellent visibility of the contents can be provided. The present disclosure can also provide a packaging material and a package obtainable by using the multilayer film. According to the present disclosure, there can be provided a multilayer film that can improve transparency to a large extent while maintaining a high hydrogen sulfide reduction rate as compared with the case of using, for example, the same quantity of inorganic particles instead of a polyphenol compound.

### Brief Description of Drawings

FIG. 1 is a cross-sectional view of a multilayer film according to an embodiment of the present disclosure.
FIG. 2 is a cross-sectional view of a packaging material according to an embodiment of the present disclosure.
FIG. 3 is a diagram showing the total heat quantity of fusion of the propylene-ethylene random copolymer (B) used in Examples and the results obtained by dividing the heat quantity of fusion at 135°C.

### Description of Embodiments

### <Multilayer film>

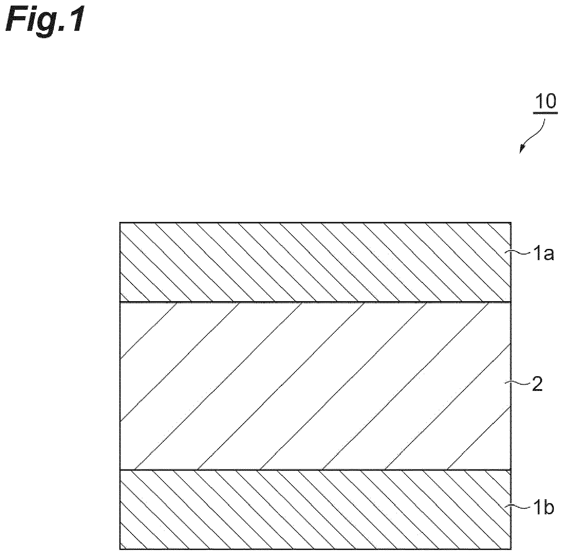

FIG. 1 is a cross-sectional view of a multilayer film according to an embodiment of the present disclosure. The multilayer film 10 includes a first outer layer 1a, an inner layer 2, and a second outer layer 1b in this order. The multilayer film is a polypropylene-based multilayer film and can be used as a polypropylene-based unstretched sealant film.

### [First outer layer and second outer layer]

The first outer layer and the second outer layer contain a propylene homopolymer (A) and a propylene-ethylene random copolymer (B). The first outer layer and the second outer layer may be formed from a propylene homopolymer (A) and a propylene-ethylene random copolymer (B). The first outer layer and the second outer layer may be collectively referred to simply as outer layers. The first outer layer and the second outer layer may have the same composition or may have different compositions. When the multilayer film is used as a packaging material, the first outer layer has a role as a heat seal layer and is disposed so as to be in contact with the contents.

### (Propylene homopolymer (A))

With regard to the propylene homopolymer (A), a method for producing the homopolymer is not particularly limited; however, the propylene homopolymer (A) can be obtained by, for example, a method of homopolymerizing propylene by using a Ziegler-Natta type catalyst, a metallocene catalyst, or a half-metallocene catalyst. As the outer layers contain the propylene homopolymer (A), excellent heat resistance can be imparted to the outer layers.

As the propylene homopolymer (A), one having a fusion start temperature of 150°C or higher and a fusion peak temperature of 155°C or higher when subjected to differential scanning calorimetry (JIS K 7121) can be used. A propylene homopolymer having both the fusion start temperature and the fusion peak temperature within these ranges has excellent heat resistance, and for example, fusion bonding is less likely to occur at the inner faces of the package after a high-temperature retort treatment is performed.

As the propylene homopolymer (A), one having a melt flow rate (MFR: ISO 1133) (temperature: 230°C, load 2.16 kg) of 2.0 to 7.0 g/10 min can be used. The melt flow rate is a parameter indicating fluidity of a polymer material when melted and is also a parameter indicating the molecular weight. For that reason, when the melt flow rate is too high, the impact resistance of the polymer material is likely to be decreased, and when the melt flow rate is too low, the load on the extruder during molding processing becomes large, the processing rate is decreased, and productivity is likely to be lowered. From these viewpoints, the melt flow rate can be set to 2.0 to 6.0 g/10 min and may be 2.0 to 5.0 g/10 min.

### (Propylene-ethylene random copolymer (B))

Regarding the propylene-ethylene random copolymer (B), a production method thereof is not particularly limited; however, the propylene-ethylene random copolymer (B) can be obtained by, for example, copolymerizing ethylene as a comonomer into a main monomer composed of propylene by using a Ziegler-Natta type catalyst, a metallocene catalyst, or a half-metallocene catalyst. When the outer layers contain the propylene-ethylene random copolymer (B), a multilayer film having excellent transparency and flexibility can be obtained.

As the propylene-ethylene random copolymer (B), one having a fusion start temperature of 140°C or higher and a fusion peak temperature of 145°C or higher when subjected to differential scanning calorimetry (JIS K 7121) can be used. A propylene-ethylene random copolymer having both the fusion start temperature and the fusion peak temperature within these ranges has excellent heat resistance, and for example, fusion bonding is less likely to occur at the inner faces of the package after a harsh retort treatment at 135°C for 40 minutes is performed.

As the propylene-ethylene random copolymer (B), one whose ratio ΔHₕ/ΔHₗ between the heat quantity of fusion ΔHₕ on the higher temperature side and the heat quantity of fusion ΔHₗ on the lower temperature side than a measurement temperature of 135°C when subjected to differential scanning calorimetry (JIS K 7121) is 1.5 to 2.5, can be used. When the above-described ratio is equal to or lower than the upper limit value, flexibility of the film is maintained, edge break of a heat-sealed part after a retort treatment can be suppressed, and the heat seal strength is less likely to decrease. The lower limit value of the ratio can be set to 1.5 from the viewpoint that fusion bonding is less likely to occur at the inner faces of the package after a retort treatment.

The ethylene content of the propylene-ethylene random copolymer (B) can be set to 5.0% by mass or less. When the ethylene content is equal to or less than the upper limit value, heat resistance does not excessively decrease while maintaining transparency, and fusion bonding at the inner faces of the package after a retort treatment is easily suppressed. From this viewpoint, this ethylene content may be 4.5% by mass or less or may be 4.0% by mass or less. The lower limit of the ethylene content is not particularly limited; however, from the viewpoint that flexibility of the film is maintained, edge break can be suppressed at the heat-sealed part after a retort treatment, and the heat seal strength is less likely to decrease, the lower limit can be set to 2.0% by mass.

The ethylene content of the propylene-ethylene random copolymer (B) can be measured by the method for quantitatively determining the ethylene content (IR method), which is described on pages 412 to 413 of Polymer Analysis Handbook (May 10, 2013, 3rd Edition) edited by the Japan Society of Analytical Chemistry, Polymer Analysis Round-Table Conference.

The outer layers may contain 70 to 30 parts by mass of the propylene homopolymer (A) and 30 to 70 parts by mass of the propylene-ethylene random copolymer (B). When the content percentage of the propylene homopolymer (A) is 30 parts by mass or more, excellent heat resistance is easily maintained. Furthermore, when the content proportion of the propylene homopolymer (A) is 70 parts by mass or less, that is, when the content of the propylene-ethylene random copolymer (B) is at least 30 parts by mass or more, excellent transparency and heat sealability are likely to be exhibited. From these viewpoints, the outer layers may contain 60 to 40 parts by mass of the propylene homopolymer (A) and 40 to 60 parts by mass of the propylene-ethylene random copolymer (B).

### [Inner layer]

The inner layer contains a propylene-ethylene block copolymer (C) and an ethylene-propylene copolymer elastomer (D). The inner layer may be formed from a propylene-ethylene block copolymer (C) and an ethylene-propylene copolymer elastomer (D).

### (Propylene-ethylene block copolymer (C))

The propylene-ethylene block copolymer (C) is a copolymer obtainable by producing a propylene polymer (C1) in a first step and then producing an ethylene-propylene copolymer (C2) by gas phase polymerization in a second step. The propylene-ethylene block copolymer (C) is not a block copolymer in which propylene polymer ends and ethylene-propylene copolymer ends are bonded but is a kind of blend copolymer. When the inner layer contains the propylene-ethylene block copolymer (C), flexibility of the film is maintained, edge break of a heat-sealed part after a retort treatment can be suppressed, excellent heat sealability is likely to be obtained, and excellent cold impact resistance is likely to be obtained.

As the propylene-ethylene block copolymer (C), one having a melt flow rate (MFR: ISO 1133) (temperature 230°C, load 2.16 kg) of 0.5 to 2.5 g/10 min can be used. When the melt flow rate becomes too high, the impact resistance of the film is likely to be decreased, and when the melt flow rate is too low, the load on the extruder during molding processing becomes large, the processing rate is decreased, and productivity is likely to be lowered. From these viewpoints, the melt flow rate can be set to 1.0 to 2.5 g/10 min and may be 1.0 to 2.0 g/10 min.

The propylene-ethylene block copolymer (C) may contain 90% to 60% by mass of the propylene polymer (C1) and 10% to 40% by mass of the ethylene-propylene copolymer (C2). When each of the components is in this range, excellent heat sealability is likely to be obtained, and excellent cold impact resistance is likely to be obtained.

The ethylene content of the ethylene-propylene copolymer (C2) included in the propylene-ethylene block copolymer (C) is not particularly limited; however, the ethylene content can be set to 20% to 40% by mass. When the ethylene content is equal to or less than the upper limit value, tackiness of the product can be suppressed, contamination caused by tack of the product is less likely to occur during production, and excellent productivity is likely to be maintained. When the ethylene content is equal to or more than the lower limit value, flexibility of the film is maintained, edge break of a heat-sealed part after a retort treatment can be suppressed, excellent heat sealability is likely to be obtained, and excellent cold impact resistance is likely to be obtained.

### (Ethylene-propylene copolymer elastomer (D))

The ethylene-propylene copolymer elastomer (D) can be obtained by, for example, a slurry polymerization method carried out in the presence of an inert hydrocarbon such as hexane, heptane, or kerosene, or a liquefied α-olefin solvent such as propylene, or by a gas phase polymerization method in the absence of solvent. Specifically, the ethylene-propylene copolymer elastomer (D) is obtained by using a known multistage polymerization method. That is, the ethylene-propylene copolymer elastomer (D) is a polymerized type high rubber-containing polypropylene-based resin obtainable by polymerizing propylene and/or propylene-α-olefin polymer in a first stage reaction and then copolymerizing propylene with an α-olefin in a second stage reaction. When the inner layer contains the ethylene-propylene copolymer elastomer (D), flexibility is easily imparted to the film, edge break of a heat-sealed part can be suppressed, excellent heat sealability is likely to be obtained, and excellent cold impact resistance is likely to be obtained.

As the ethylene-propylene copolymer elastomer (D), one having a melt flow rate (MFR: ISO 1133) (temperature 230°C, load 2.16 kg) of 0.5 to 3.5 g/10 min can be used. When the melt flow rate is equal to or more than the lower limit value, the load on the extruder during molding processing becomes small, the processing rate is less likely to be decreased, and excellent productivity is likely to be maintained. When the melt flow rate is equal to or less than the upper limit value, satisfactory compatibility between the propylene-ethylene block copolymer (C) and the ethylene-propylene copolymer elastomer (D) is obtained, and transparency is less likely to be decreased.

As the ethylene-propylene copolymer elastomer (D), one in which the mass ratio of the propylene content and the ethylene content (propylene content/ethylene content) is 1.5 to 4.0 can be used. When the above-described ratio is equal to or more than the lower limit, flexibility of the film is maintained, edge break of a heat-sealed part after a retort treatment can be suppressed, and excellent heat sealability is likely to be obtained. When the above-described ratio is equal to or less than the upper limit value, satisfactory compatibility between the propylene-ethylene block copolymer (C) and the ethylene-propylene copolymer elastomer (D) is obtained, and transparency is less likely to be decreased.

The inner layer may contain 90 to 50 parts by mass of the propylene-ethylene block copolymer (C) and 10 to 50 parts by mass of the ethylene-propylene copolymer elastomer (D). When the content proportion of the propylene-ethylene block copolymer (C) is 50 parts by mass or more, excellent heat sealability is easily maintained. Furthermore, when the content proportion of the propylene-ethylene block copolymer (C) is 90 parts by mass or less, that is, when the content of the ethylene-propylene copolymer elastomer (D) is at least 10 parts by mass or more, even more excellent heat sealability and excellent cold impact resistance can be exhibited. From these viewpoints, the inner layer may contain 80 to 60 parts by mass of the propylene-ethylene block copolymer (C) and 20 to 40 parts by mass of the ethylene-propylene copolymer elastomer (D).

### [Polyphenol compound]

At least one layer of the first outer layer, the inner layer, and the second outer layer further contains a polyphenol compound. When the inner layer further contains a polyphenol compound in addition to the propylene-ethylene block copolymer (C) and the ethylene-propylene copolymer elastomer (D), the transparency of the film can be maintained, and at the same time, a deodorization function can be imparted to the film. When the outer layers further contain a polyphenol compound in addition to the propylene homopolymer (A) and the propylene-ethylene random copolymer (B), a deodorization function can be imparted to the film.

The content of the polyphenol compound can be set to 1.5% to 8.0% by mass based on the total amount of the multilayer film, and the content may be 1.5% to 5.0% by mass, may be 2.0% to 4.5% by mass, or may be 3.0% to 4.0% by mass. When the content of the polyphenol compound is equal to or more than the lower limit, an excellent deodorizing effect is likely to be obtained against sulfurous odors originating from sulfur compounds, and when the content is equal to or less than the upper limit, excellent transparency is likely to be exhibited.

Examples of the polyphenol compound include tannin, tannic acid, gallic acid, and a condensed-type tannin, which is a high-molecular weight polyphenol. Condensed-type tannin is included in persimmon fruits (astringent persimmons), immature bananas, grape pericarp and seeds, and the like and can be obtained as a concentrate by squeezing or solvent extraction. These polyphenol compounds may be used singly, or two or more kinds thereof may be used in combination.

From the viewpoint of securing excellent deodorization characteristics, persimmon tannin can be especially used as the condensed-type tannin. As a product including a large amount of persimmon tannin, astringent persimmon juice is known. Astringent persimmon juice includes a large amount of persimmon tannin, which is a kind of the condensed-type tannin. Persimmon tannin is a high-molecular weight proanthocyanidin polymer containing epicatechin, catechin-3-gallate, epigallocatechin, and gallocatechin-3-gallate as constituent components. Persimmon tannin has many hydroxy groups that are strongly reactive. Therefore, it is considered that persimmon tannin can exhibit a deodorizing action by binding and enveloping odorous components. Furthermore, persimmon tannin has less impact on the environment and human health as compared with other organic or inorganic deodorants and antibacterial agents, which are not derived from natural products, and is particularly suitable for a packaging material for retort food.

When persimmon tannin is incorporated into the multilayer film, for example, persimmon tannin obtainable by purification may be used, or astringent persimmon juice itself containing persimmon tannin may also be used. In the case of using astringent persimmon juice, adjusting the amount of tannin can be used with a thermoplastic resin. By using astringent persimmon juice, a process of purifying persimmon tannin can be omitted, and it is economically more excellent.

The thickness of the multilayer film is not particularly limited as long as it is within a range allowing the multilayer film to be used, for example, as a film for a packaging material; however, when the film is too thick, there is a cost disadvantage. For this reason, the thickness of the multilayer film can be set to 100 µm or less and may be 50 to 70 µm.

The thickness of the outer layers (that is, the total thickness of the first outer layer and the second outer layer) may be 25% to 42% based on the thickness of the multilayer film. When the proportion of the thickness of the outer layers is equal to or more than the lower limit value, excellent transparency is likely to be obtained, and when the proportion of the thickness is equal to or less than the upper limit value, deterioration of the heat sealability of the film can be suppressed, and practical usability is likely to be obtained.

The thickness of the outer layers (that is, the total thickness of the first outer layer and the second outer layer) may be 10 µm or more or may be 15 µm or more. As a result, transparency of the film is easily secured, and the heat seal strength is less likely to be decreased. The thickness upper limit of the outer layers is not particularly limited; however, the thickness upper limit can be set to 40 µm or less so as to easily secure the cold impact resistance, and the upper limit may be 30 µm or less or may be 20 µm or less.

The thickness of the inner layer may be 30 µm or more or may be 35 µm or more. As a result, flexibility of the film is maintained, the film is less likely to be fractured after a retort treatment, and the heat seal strength is less likely to decrease. The thickness upper limit of the inner layer is not particularly limited; however, for example, from the viewpoint of cost, the thickness upper limit can be set to 80 µm or less, and the upper limit may be 70 µm or less or may be 50 µm or less.

### <Method for producing multilayer film>

A method for producing a multilayer film is not particularly limited, and any known method can be used. Examples of a method for thermoforming processing include a melt kneading method using a general mixing machine such as a single-screw extruder, a twin-screw extruder, or a multi-screw extruder; and a method of dissolving or dispersing and mixing each component and then heating and removing the solvent. When workability is considered, a single-screw extruder or a twin-screw extruder can be used. In the case of using a single-screw extruder, examples of the screw include a full-flight screw, a screw with a mixing element, a barrier-flight screw, and a fluted screw, and these can be used without particular limitation. Regarding the twin-screw extruder, a co-rotating twin-screw extruder, a counter-rotating twin-screw extruder, or the like can be used, and regarding the screw shape, a full-flight screw, a kneading disk type screw, or the like can be used without particular limitation.

With regard to the above-described method, it is possible to use a method of melting a multilayer film by using a single-screw extruder, a twin-screw extruder, or the like and then forming a film with a T-die through a feed block or a multi-manifold.

The obtained multilayer film may be subjected to a surface modification treatment of improving the post-process aptitude as necessary. For example, a printed surface or a surface in contact with the base material may be subjected to a surface modification treatment in order to improve the printing aptitude at the time of using a simple film, or to improve the lamination aptitude at the time of using a laminate. Examples of the surface modification treatment include treatments of generating functional groups by oxidizing a film surface, such as a corona discharge treatment, a plasma treatment, and a flame treatment; and a modification treatment by a wet process of forming an easy-adhesive layer by coating.

### <Packaging material>

The multilayer film may be used as a simple film or may be used after being laminated on a base material, and the method of using the multilayer film as a packaging material is not particularly limited.

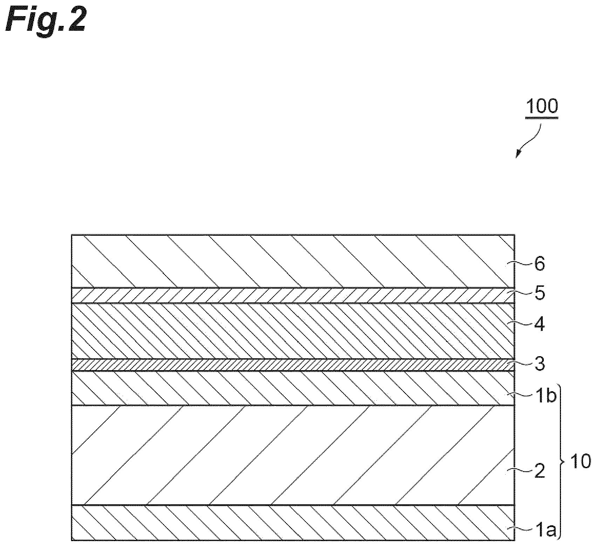

When the multilayer film is laminated on a base material and used, the packaging material can include the above-described multilayer film and a base material. Specifically, such a packaging material can be obtained by laminating at least one layer of a base material such as a biaxially stretched polyamide film (ONy), a biaxially stretched polyester film (PET), a printed paper, a metal foil (AL foil), or a transparent vapor-deposited film, on the above-described multilayer film and forming a laminated body. FIG. 2 is a cross-sectional view of a packaging material according to an embodiment of the present disclosure. The packaging material 100 shown in the same view includes a multilayer film 10, an adhesive layer 3, a base material film 4, an adhesive layer 5, and a transparent vapor-deposited film 6 in this order. Regarding a method for producing a laminated body, in addition to a conventional dry lamination method of sticking a base material film or the like to a multilayer film by using an adhesive in this way, a method of directly extruding and laminating a multilayer film on a base material film or the like as necessary may be mentioned.

The laminate structure of the laminated body can be appropriately adjusted according to the required characteristics of the package, for example, the barrier properties satisfying the shelf life of food to be packaged, the size and impact resistance capable of handling the weight of the contents, and the visibility of the contents.

### <Package>

A package (packaging bag) may be made into a bag from the above-described packaging material, and there is no particular limitation on the bag-making style. For example, the above-described packaging material (the laminated body) can be used as a flat bag, a three-sided bag, a folded bag, a gusset bag, a standing pouch, a spouted pouch, a beaked pouch, and the like, all of which use the multilayer film as a sealing material.

### Examples

The present disclosure will be described in detail below by using Examples; however, the present disclosure is not intended to be limited only to the following Examples.

### <Preparation of various materials>

A propylene homopolymer (A), a propylene-ethylene random copolymer (B), a propylene-ethylene block copolymer (C), an ethylene-propylene copolymer elastomer (D), and a deodorant masterbatch (E) as shown below were prepared.

### (Propylene homopolymer (A))

A propylene homopolymer having a fusion start temperature of 153°C and a fusion peak temperature of 159°C when subjected to differential scanning calorimetry (JIS K 7121) and having a melt flow rate (MFR: ISO 1133) (temperature 230°C, load 2.16 kg) of 3.0 g/10 min.

### (Propylene-ethylene random copolymer (B))

A propylene-ethylene random copolymer having a fusion start temperature of 142°C and a fusion peak temperature of 147°C when subjected to differential scanning calorimetry (JIS K 7121), having a ΔHₕ/ΔHₗ value of 1.84, and having an ethylene content of 3.4% by mass.

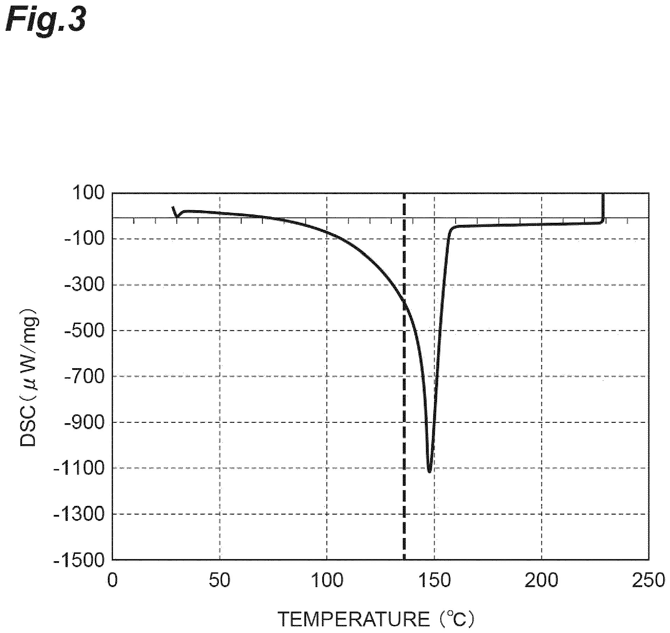

Measurement of the ethylene content was carried out by the method for quantitatively determining the ethylene content (IR method) as described on pages 412 to 413 of Polymer Analysis Handbook (May 10, 2013, 3rd Edition) edited by the Japan Society of Analytical Chemistry, Polymer Analysis Round-Table Conference. ΔHₕ/ΔHₗ is the ratio between the heat quantity of fusion ΔHₕ on the higher temperature side and the heat quantity of fusion ΔHₗ on the lower temperature side than a measurement temperature of 135°C when subjected to differential scanning calorimetry (JIS K 7121). FIG. 3 is a diagram showing the total heat quantity of fusion of the propylene-ethylene random copolymer (B) and the results obtained by dividing the heat quantity of fusion at 135°C.

### (Propylene-ethylene block copolymer (C))

A propylene-ethylene block copolymer having a melt flow rate (MFR: ISO 1133) (temperature 230°C, load 2.16 kg) of 2.0 g/10 min, containing 77.1% by mass of a propylene polymer and 22.9% by mass of an ethylene-propylene copolymer, and having an ethylene content included in the ethylene-propylene copolymer of 28.7% by mass.

### (Ethylene-propylene copolymer elastomer (D))

An ethylene-propylene copolymer elastomer having a melt flow rate (MFR: ISO 1133) (temperature 230°C, load 2.16 kg) of 0.6 g/10 min and having a propylene content/ethylene content (mass ratio) of 2.7.

### (Deodorant masterbatch (E))

As a deodorant masterbatch (E), MB-FPW-PE manufactured by Rilis Co., Ltd. was used.

### <Production of multilayer film (polypropylene-based multilayer film)>

### (Example 1)

A resin mixture was prepared by mixing 50 parts by mass of the propylene homopolymer (A) and 50 parts by mass of the propylene-ethylene random copolymer (B) in the form of a pellet, for forming the outer layers.

For forming the inner layer, 67.8 parts by mass of the propylene-ethylene block copolymer (C) and 32.2 parts by mass of the ethylene-propylene copolymer elastomer (D) were mixed in the form of pellets, and 3.09 parts by mass of the deodorant masterbatch (E) (adjusted to have a persimmon tannin content in the multilayer film of 2.0% by mass) was mixed with respect to 100 parts by mass of the sum of the propylene-ethylene block copolymer (C) and the ethylene-propylene copolymer elastomer (D) to prepare a resin mixture.

Each of the resin mixtures was supplied to an extruder whose temperature was set to 250°C and kneaded in a molten state, subsequently the resin mixtures were laminated with a T-die extruder having a feed block such that the thickness of each of the first outer layer and the second outer layer was 10 µm, while the thickness of the inner layer was 40 µm, and a film of Example 1 was produced.

### (Example 2)

A film of Example 2 was produced in the same manner as in Example 1, except that the blending proportion of the deodorant masterbatch (E) was changed as indicated in Table 1.

### (Example 3)

A film of Example 3 was produced in the same manner as in Example 1, except that the blending proportion of the deodorant masterbatch (E) was changed as indicated in Table 1.

### (Example 4)

A film of Example 4 was produced in the same manner as in Example 1, except that the blending proportion of the deodorant masterbatch (E) was changed as indicated in Table 1.

### (Comparative Example 1)

A film of Comparative Example 1 was produced in the same manner as in Example 1, except that the deodorant masterbatch (E) was not blended.

### <Various evaluations>

The following evaluations were performed for the film obtained in each example. The results are shown in Table 1.

### [Measurement of haze after retort]

The first outer layers of the multilayer films obtained in each example were arranged to face each other and heat-sealed by using a heat sealer manufactured by TESTER SANGYO CO,. LTD. under the conditions of a sealing pressure of 0.2 MPa, a sealing time of 1 second, a seal width of 5 mm, and a sealing temperature of 200°C, to produce a package (three-sided bag). Thereafter, the package was filled with water, and a retort treatment was performed at 135°C for 40 minutes. An evaluation of a film that had been subjected to the retort treatment was performed according to the method for measuring haze as described in JIS K 7136, by using a spectrophotometric color haze meter (product No. COH 7700) manufactured by NIPPON DENSHOKU INDUSTRIES CO., LTD.

### [Hydrogen sulfide reduction rate]

A biaxially stretched polyester film (PET) having a thickness of 12 µm, an AL foil having a thickness of 7 µm, a biaxially stretched polyamide film (ONy) having a thickness of 15 µm, and the multilayer film obtained in each example were stuck together by a conventional dry lamination method using a urethane-based adhesive, and a laminated body having the following configuration was formed.

Laminated body configuration: PET/adhesive/AL foil/adhesive/ONy/adhesive/multilayer film.

The multilayer films (first outer layer) of the laminated bodies were arranged to face each other and heat-sealed by using a heat sealer manufactured by TESTER SANGYO CO,. LTD. under the conditions of a sealing pressure of 0.2 MPa, a sealing time of 1 second, a seal width of 5 mm, and a sealing temperature of 200°C, to produce a package (three-sided bag). Thereafter, the package was filled with an aqueous solution of cysteine including 0.03% by mass of L-cysteine, and a retort treatment was performed at 135°C for 40 minutes. After the retort treatment, the solution in the package was collected, and measurement of the hydrogen sulfide reduction rate was performed by using a PACK TEST (product No. WAK-S) manufactured by KYORITSU CHEMICAL-CHECK Lab., Corp. Regarding the hydrogen sulfide reduction rate, the collected solution was reacted with the reagent of PACK TEST, subsequently the light absorbance at a wavelength of 668 nm was measured with a spectrophotometer, and the hydrogen sulfide reduction rate was calculated from a reduction rate of the light absorbance measured using the multilayer film obtained in each example with respect to the light absorbance measured using a multilayer film having no deodorant blended therein (Comparative Example 1).

**[Table 1]**

| Film configuration and characteristics | | | Example | | | | Comparative Example |
|---|---|---|---|---|---|---|---|
| | | | 1 | 2 | 3 | 4 | 1 |
| Thickness | Entirety | [µm] | 60.00 | 60.00 | 60.00 | 60.00 | 60.00 |
| | First/second outer layer | [µm] | 10.00 | 10.00 | 10.00 | 10.00 | 10.00 |
| | Inner layer | [µm] | 40.00 | 40.00 | 40.00 | 40.00 | 40.00 |
| Outer layer composition | Resin (A) | [parts by mass] | 50.00 | 50.00 | 50.00 | 50.00 | 50.00 |
| | Resin (B) | [parts by mass] | 50.00 | 50.00 | 50.00 | 50.00 | 50.00 |
| Inner layer composition | Resin (C) | [parts by mass] | 67.80 | 67.80 | 67.80 | 67.80 | 67.80 |
| | Resin (D) | [parts by mass] | 32.20 | 32.20 | 32.20 | 32.20 | 32.20 |
| | Deodorant masterbatch (E) | [parts by mass] | 3.09 | 5.26 | 7.53 | 11.11 | - |
| Persimmon tannin content in multilayer film | | [% by mass] | 2.00 | 3.33 | 4.67 | 6.67 | - |
| Haze after retort | | [%] | 6.11 | 12.36 | 14.80 | 23.33 | 5.03 |
| Hydrogen sulfide reduction rate | | [%] | 81.38 | 87.40 | 87.94 | 88.81 | - |

| | | | | | | | |
|---|---|---|---|---|---|---|---|
| * The amount of the deodorant masterbatch is an amount with respect to 100 parts by mass of the component (C) and the component (D). | | | | | | | |

### Industrial Applicability

The polypropylene-based multilayer film of the present disclosure can be suitably used for a sealant film for retort packaging, which has an excellent deodorizing effect against sulfurous odors generated from retort foods and is also excellent in terms of high transparency required for visually recognizing the contents.

### Reference Signs List

10: multilayer film, 100: packaging material, 1a: first outer layer, 1b: second outer layer, 2: inner layer, 3: adhesive layer, 4: base material film, 5: adhesive layer, 6: transparent vapor-deposited film.

## Claims

1. A multilayer film comprising:
a first outer layer containing a propylene homopolymer (A) and a propylene-ethylene random copolymer (B) and serving as a heat seal layer;
an inner layer containing a propylene-ethylene block copolymer (C) and an ethylene-propylene copolymer elastomer (D); and
a second outer layer containing a propylene homopolymer (A) and a propylene-ethylene random copolymer (B), in this order,
wherein at least one layer of the first outer layer, the inner layer, and the second outer layer further contains a polyphenol compound.

2. The multilayer film according to claim 1, wherein a content of the polyphenol compound is 1.5% to 8.0% by mass based on a total amount of the multilayer film.

3. The multilayer film according to claim 1 or 2, wherein the inner layer contains 90 to 50 parts by mass of the propylene-ethylene block copolymer (C) and 10 to 50 parts by mass of the ethylene-propylene copolymer elastomer (D) and further contains the polyphenol compound.

4. The multilayer film according to claim 1 or 2, wherein the first outer layer and the second outer layer contain 70 to 30 parts by mass of the propylene homopolymer (A) and 30 to 70 parts by mass of the propylene-ethylene random copolymer (B) and further contain the polyphenol compound.

5. The multilayer film according to any one of claims 1 to 4, wherein the polyphenol compound is condensed-type tannin.

6. The multilayer film according to any one of claims 1 to 5, wherein a total thickness of the first outer layer and the second outer layer is 25% to 42% based on a thickness of the multilayer film.

7. The multilayer film according to any one of claims 1 to 6, wherein the inner layer has a thickness of 30 µm or more.

8. A packaging material comprising the multilayer film according to any one of claims 1 to 7 and a base material.

9. A package obtained by making a bag from the packaging material according to claim 8.
